# FASCICULE DE BREVET EUROPEEN

(11) **EP 0 853 360 B1**
(45) Date de publication et mention de la délivrance du brevet: **01.10.2003**
(21) Numéro de dépôt: 97403037.1
(22) Date de dépôt: 15.12.1997
(51) Int. Cl.: H02B 13/065

(54) **Procédé de discrimination entre un arc interne et un arc de coupure détectés dans une installation électrique sous enveloppe métallique**
Verfahren zur Unterscheidung eines internen Fehlerlichtbogens von einem Schaltlichtbogen in einem metallgekapselten Schaltgerät
Procedure for discriminating between an internal arc and an interruption arc in a metal clad electric installation

(30) Priorité: 16.12.1996 FR 9615427
(43) Date de publication de la demande: 15.07.1998
(73) Titulaire: GEC ALSTHOM T & D SA, 75116 Paris (FR)
(72) Inventeur: Marmonier, Jean, 73100 Aix Les Bains (FR); Penning, Jean-François, 73106 Aix Les Bains (FR)
(74) Mandataire: de Lambilly Delorme, Marie Pierre

(56) Documents cités:
- EP-A- 0 103 921
- DE-A- 4 226 234
- DE-A- 19 508 763
- DE-C- 19 504 731
- US-A- 3 887 915
- US-A- 4 791 518
- US-A- 4 878 144
- US-A- 5 185 684
- I TAKAGI ET AL.: "Application of Gas Pressure Sensor for Fault Location System in Gas Insulated Substation." IEEE TRANSACTIONS ON POWER DELIVERY, vol. 10, no. 4, octobre 1995, NEW YORK, US, pages 1806-1814, XP000558212

## Description

La présente invention se rapporte à un procédé de discrimination entre un arc interne et un arc de coupure détectés dans une installation électrique sous enveloppe métallique dite blindée, haute ou moyenne tension.

Il est connu dans un appareillage électrique, en particulier sous'enveloppe métallique, comportant au moins. un jeu de barres et un disjoncteur et équipé, de façon classique, d'un système de protection et d'un calculateur, de détecter l'apparition d'un arc entre un conducteur et l'enveloppe métallique (ou entre conducteurs dans le cas d'une installation triphasé), dit arc interne, au moyen d'un capteur. Ce capteur peut être un détecteur de pression ou un détecteur de lumière. De tels dispositifs sont décrits dans les brevets EP-0 197 778 et EP-0 313 422.

Cependant, lors de la coupure de courant de charge ou de courants de défaut par les contacts du disjoncteur, Marc étiré entre les contacts, dit arc de coupure, a des caractéristiques similaires à un arc interne. L'augmentation de lumière ou de pression lors de la coupure d'un courant de court-circuit fort est proche de celle créée lors de l'apparition d'un arc interne éliminé rapidement avec un courant de court circuit faible.

Ceci rend incertaine la distinction entre arc interne et arc de coupure par simple mesure de l'augmentation de pression ou de lumière.

L'invention résout ce problème et propose un procédé de discrimination entre un arc interne et un arc de coupure détectés dans un appareillage sous enveloppe métallique comportant au moins un jeu de barres et un disjoncteur et équipé d'un système de protection et d'un calculateur.

Un tel appareillage est en effet, de façon classique, équipé d'un système de protection constitué d'agencements électroniques d'analyse de la tension et/ou de l'intensité. Ce système de protection détecte le défaut et transmet l'ordre de déclenchement à la fois à l'agencement de déclenchement du disjoncteur et au calculateur. Dans l'agencement de déclenchement, une bobine électromagnétique d'ouverture du disjoncteur est mise en fonction, dont l'électroaimant actionne le dispositif de manoeuvre des contacts du disjoncteur. L'intervalle de temps entre l'apparition de l'arc et l'acquisition de l'ordre de déclenchement par le calculateur est typiquement compris entre 5 et 20 ms, 5 ms dans le cas d'une protection dite rapide et 20 ms dans le cas d'une protection dite lente.

Le procédé conforme à l'invention consiste à détecter l'apparition d'un arc au moyen d'un capteur générant un signal d'apparition d'arc, à transmettre ce signal au. calculateur et à déterminer le laps de temps T = tₒ-tₐ entre l'instant tₒ de réception d'un ordre de déclenchement du disjoncteur transmis au calculateur par. le système de protection et l'instant tₐ de début d'acquisition de ce signal par le calculateur.

Selon une première caractéristique, si le laps de temps T est positif, l'arc est déterminé comme un arc interne.

Selon une deuxième caractéristique, si le laps de temps T est négatif et de valeur absolue inférieure ou égale à 10 ms, l'arc est déterminé comme un arc interne.

Selon une troisième caractéristique, si le laps de temps T est négatif et de valeur absolue supérieure à 10 ms, une analyse de l'évolution du signal d'apparition d'arc est effectuée.

Dans ce dernier cas, si le signal présente un point de rupture dans les 500 ms suivant son début d'acquisition, l'arc est déterminé comme un arc interne et si le signal ne présente pas de point de rupture dans les 500 ms suivant son début d'acquisition, l'arc est déterminé comme un arc de coupure.

Selon une autre caractéristique du procédé, un signal d'existence d'un arc est généré au moyen dudit capteur pour être transmis audit calculateur, et la durée dudit signal est comparée à une valeur limite prédéterminée.

Avantageusement, ladite valeur limite est comprise entre la durée T₁ mesurable d'un arc de coupure et le laps .de temps T₂ mesurable entre l'apparition d'un arc interne et son élimination par ouverture du disjoncteur, l'arc étant déterminé comme un arc de coupure si la durée du signal est inférieure à cette valeur limite et l'arc étant déterminée. comme un arc interne si la durée du signal est supérieure à cette valeur limite.

En pratique, de préférence, ladite valeur limite est de l'ordre de 50 ms.

L'invention est décrite ci-après plus en détail à l'aide de figures ne représentant qu'un mode de réalisation préféré de l'invention.

Les figures 1A à 1C illustrent le cas d'un arc interne situé dans le disjoncteur.

Les figures 2A à 2C illustrent le cas d'un arc interne situé à l'extérieur du disjoncteur et suivi de la coupure du courant de court-circuit par le disjoncteur.

Les figures 3A à 3D illustrent le cas d'un arc interne dans le disjoncteur consécutif à une coupure d'un courant de court-circuit.

La figure 4 représente un signal d'existence d'arc enregistré par le calculateur.

Comme représenté sur la figure 1A, un appareillage sous enveloppe métallique comporte un jeu de barres 1 et un disjoncteur 2 relié à une ligne de départ 3. Il est équipé d'un système de protection 4 et d'un calculateur 5.

Le système de protection 4 est constitué d'agencements électroniques d'analyse de la tension et/ou de l'intensité. Lorsqu'il détecte un courant de défaut, il transmet un ordre de déclenchement à la fois à l'agencement de déclenchement 6 du disjoncteur 2 et au calculateur 5. Une bobine électromagnétique d'ouverture du disjoncteur est mise en fonction, dont l'électroaimant actionne le dispositif de manoeuvre des contacts du disjoncteur, dans l'agencement de déclenchement 6. L'intervalle de temps entre l'apparition du défaut, ici l'arc interne 7 intérieur au disjoncteur, et l'acquisition de l'ordre de déclenchement par le calculateur est typiquement compris entre 5 et 20 ms, 5 ms dans le cas d'une protection dite rapide et 20 ms dans le cas d'une protection dite lente.

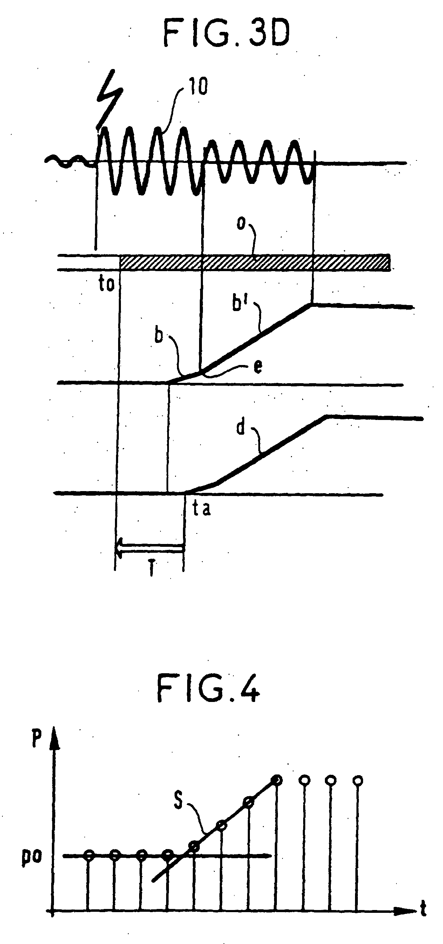

Le disjoncteur 2 est équipé d'un capteur 8, ici un capteur de pression, destiné à détecter l'existence d'un arc interne dans l'installation. Ce capteur de pression 8 est destiné à transmettre la pression régnant dans le disjoncteur 2 au calculateur 5 qui enregistrent ces données de pression selon un certain échantillonnage en temps, par exemple 20 ms, comme illustré sur la figure 4. En cas de données de pression significativement supérieures à la pression normale p₀, qui augmentent de façon sensiblement proportionnelle, un arc est détecté et le signal s de montée en 'pression formé de ces données est appelé signal d'existence d'un arc. Il est possible d'en déduire le début de la montée en pression, par exemple à partir de trois échantillons de pression supérieure à la pression normale. Ce départ de front de montée en pression détecté sera appelé début d'acquisition du signal.

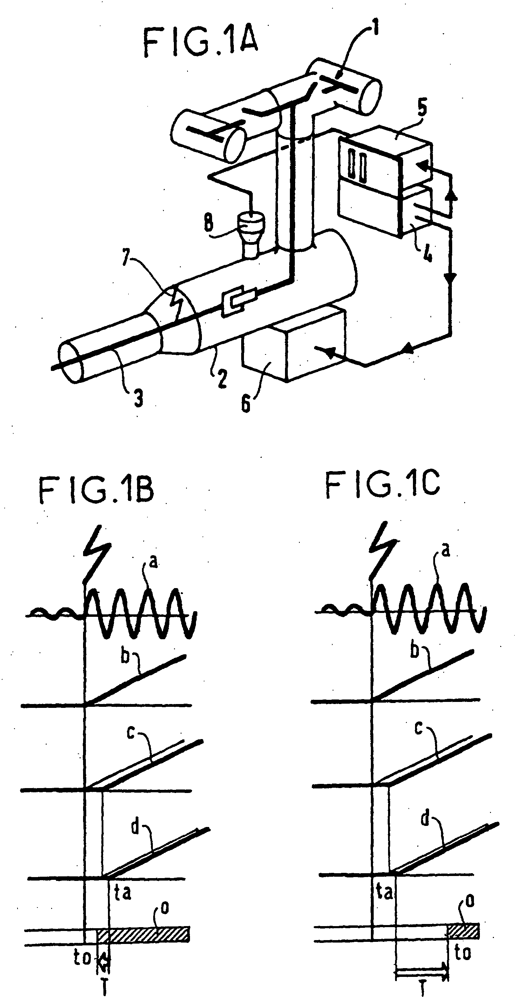

Les figures 1B et 1C illustrent les processus de détection de l'arc et de déclenchement du disjoncteur en fonction du temps.

L'arc interne 7 crée un courant de défaut a et une augmentation de pression b. Cette augmentation de pression se propage dans le SF6, approximativement à la vitesse du son, c'est-à-dire 150 m/s, et est détectée par le capteur 8 avec un premier retard correspondant à la distance entre l'arc 7 et le capteur 8. Ce premier retard. est illustré en c.

Ce front de montée en pression est ensuite transmis à l'instant tₐ au calculateur 5 avec un second retard relativement faible dû d'une part aux caractéristiques du capteur 8 et d'autre part à la chaîne d'acquisition du calculateur 5. Ce second retard est illustré en d.

Pendant ce temps, le système de protection 4 a détecté le courant de défaut et transmet l'ordre de déclenchement o du disjoncteur au calculateur 5 à l'instant tₒ. La figure 1B illustre une protection rapide où T = tₒ-tₐ est négatif et inférieur ou égal en valeur absolue à 10 ms et la figure 1C une protection lente où T = tₒ-tₐ est positif.

Cet arc interne sera suivi d'une séparation des contacts et d'un arc de coupure entre ceux-ci. L'augmentation de pression qui en résultera sera sans conséquence, les critères de décision étant déjà établis.

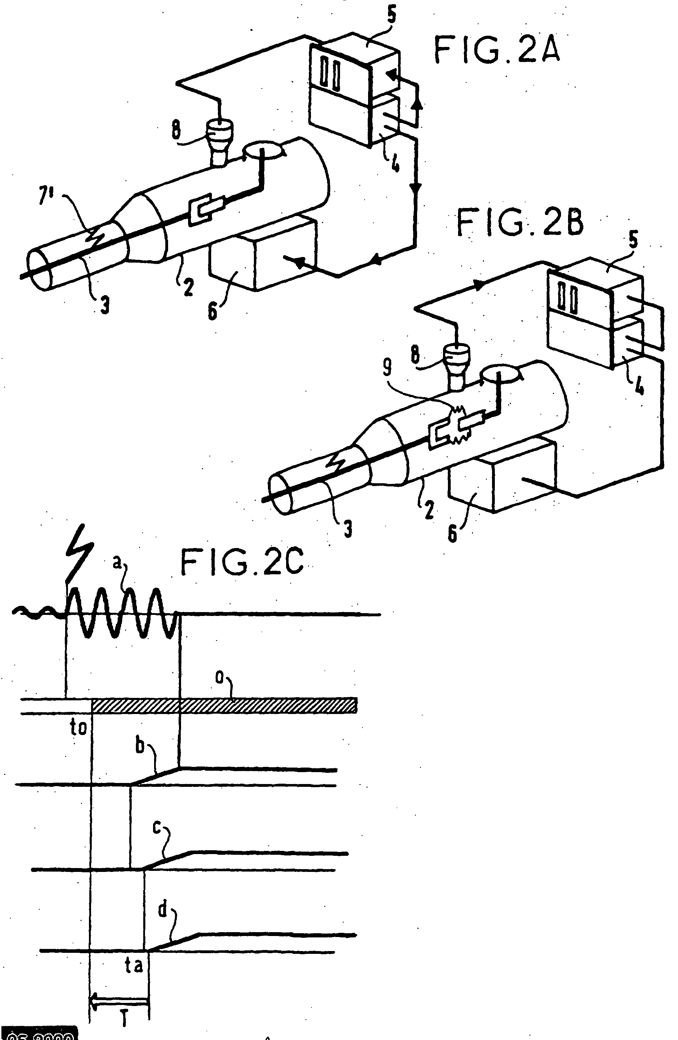

Selon les figures 2A à 2C, un arc interne 7' apparaît à l'extérieur au disjoncteur 2 et n'est donc pas détecté par le capteur 8. Par contre, le courant de défaut a est détecté par le système de protection 4 qui transmet un ordre de déclenchement o du disjoncteur au calculateur 5 à l'instant tₒ.

Les contacts du disjoncteur 2 sont séparés comme représenté sur la figure 2B et un arc de coupure 9 du courant de court-circuit crée une augmentation de pression b qui se propage avec un premier retard au capteur 8. Ce premier retard dû à la distance entre la chambre de coupure et le capteur 8 est illustré par c. Cette augmentation de pression est amplifiée par une onde de surpression provoquée par le déplacement des contacts.

Le front de montée en pression est ensuite transmis avec un second retard au calculateur 5 comme vu précédemment et il est acquis par celui-ci à l'instant tₐ.

Le laps de temps T = tₒ-tₐ est négatif et supérieur en valeur absolue au temps entre la réception de l'ordre de déclenchement du disjoncteur et la séparation des contacts, à savoir 20 ms environ.

Il est à noter que, dans les deux cas de figures précédents, les critères de décision peuvent être déterminés directement par le calculateur 5.

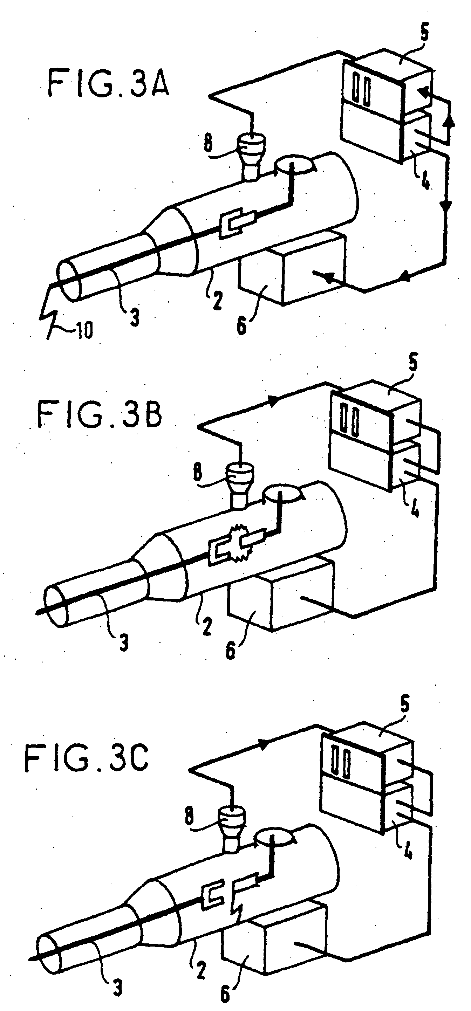

Les figures 3A à 3D illustrent un troisième cas correspondant à l'apparition d'un arc interne dans le disjoncteur consécutif à une coupure de courant de court-circuit par le disjoncteur.

Un courant de défaut 10 apparaît sur la ligne et est détecté par le système de protection 4 qui envoie un ordre de déclenchement o au calculateur 5 qui le reçoit à l'instant tₒ.

Les contacts sont séparés comme visible sur la figure 3B et l'arc entraîne une première augmentation de pression b comme dans le cas précédent.

Si un arc interne apparaît alors dans le disjoncteur 2, ce premier front de montée en pression b est suivi d'un second front de montée en pression b', dont la pente plus grande entraîne la création d'un point dit de rupture e.

Ces fronts de montée en pression sont transmis au capteur 8, puis au calculateur 5 à l'instant tₐ, comme illustré en d. Comme dans le cas précédent, T = tₒ-tₐ est négatif et supérieur en valeur absolue au temps entre la réception de l'ordre de déclenchement du disjoncteur et la séparation des contacts, à savoir 20 ms environ.

En conséquence, lorsque le laps de temps T est négatif et supérieur en valeur absolue à 10 ms, une analyse de l'évolution du signal d'apparition d'arc est effectuée sur 500 ms, afin de déterminer si elle comprend un point de rupture dans les 500 ms suivant son début d'acquisition. Si c'est le cas, il y a arc interne.

Il est à noter que les exemples précédents considèrent que l'installation est équipée d'un agencement de protection comportant un jeu de transformateurs de courant pour la protection de ligne du côté du jeu de barres et un jeu de transformateurs de courant pour la protection différentielle du jeu de barres du côté ligne.

Dans le cas où les deux jeux de transformateurs de courant sont situés du côté de la ligne, dans le cas où les sectionneurs du jeu de barres sont ouverts, c'est la protection de distance qui assurera l'ordre de déclenchement du disjoncteur par télétransmission et cet ordre sera reçu dans un délai de 250 à 500 ms par le calculateur. Ce cas de figure donne donc un résultat similaire à l'exemple précédent dit protection lente.

Le procédé conforme à l'invention peut être résumé par le tableau suivant :

| | | | |
|---|---|---|---|
| T = tₒ-tₐ > 0 | T = tₒ-tₐ < 0 | | |
| ARC INTERNE | [T] < ou = 10 ms | [T] > 10 ms | |
| | ARC INTERNE | Point de rupture | Pas de point de rupture |
| | | ARC INTERNE | PAS D'ARC INTERNE |

Le procédé précédemment décrit peut être associé à un second procédé de discrimination, afin d'assurer un maximum de fiabilité. Ce second procédé est décrit ci-après.

Lorsqu'un courant de court-circuit est coupé par le disjoncteur 2, lors de la séparation des contacts, un arc de coupure s'étire entre ceux-ci. Si le disjoncteur 2 fonctionne correctement, la durée T₁ d'un arc de coupure est mesurable et en pratique inférieure à 30 ms. Dans le cas contraire, le système de protection comporte par ailleurs des dispositifs de surveillance autres, contrôlant que la coupure se passe correctement.

Lorsqu'un arc interne apparaît dans le disjoncteur ou dans un autre compartiment de l'installation, le courant de défaut est détecté par le système de protection 4, puis l'ordre de déclenchement du disjoncteur est transmis à l'agencement de déclenchement 6 où la bobine d'ouverture est actionnée et entraîne la séparation des contacts du disjoncteur 2. Entre l'apparition de l'arc interne et son élimination par ouverture du disjoncteur 2, se passe un laps de temps T₂ mesurable correspondant au temps de fonctionnement et de transmission du système de protection 4 qui est en pratique de l'ordre de 10 ms et au temps de fonctionnement de l'agencement de déclenchement 6 qui est en. pratique de l'ordre de 50 ms. Soit un laps de temps en pratique d'environ T₂ = 60 ms.

Le second procédé associé de discrimination entre un arc interne et un arc de coupure conforme à l'invention consiste à détecter l'apparition d'un arc au. moyen du capteur 8 générant un signal d'existence d'un arc, à transmettre ce signal au calculateur 5 et à déterminer si la durée du signal est inférieure ou supérieure à une valeur limite prédéterminée.

Cette valeur limite est choisie entre T₁ et T₂, avantageusement de l'ordre de 50 ms.

L'arc détecté est déterminé comme un arc de coupure si la durée du signal est inférieure à cette valeur limite et l'arc détecté est déterminé comme un arc interne si la durée du signal est supérieure à cette valeur limite.

## Revendications

1. Procédé de discrimination entre un arc interne et un arc de coupure détectés dans un appareillage sous enveloppe métallique comportant au moins un jeu de barres (1) et un disjoncteur (2) et équipé d'un système de protection (4) et d'un calculateur (5), consistant à détecter l'apparition d'un arc au moyen d'un capteur (8) générant un signal d'apparition d'arc (c), à transmettre ce signal au calculateur (5) et à déterminer le laps de temps T = tₒ-tₐ entre l'instant tₒ de réception d'un ordre de déclenchement (o) du disjoncteur transmis au calculateur (5) par le système de protection (4) et l'instant tₐ de début d'acquisition de ce signal par le calculateur (5).

2. Procédé selon la revendication 1, **caractérisé en ce que**, si le laps de temps T est positif, l'arc est déterminé comme un arc interne.

3. Procédé selon l'une des revendications précédentes, **caractérisé en ce que**, si le laps de temps T est négatif et de valeur absolue inférieure ou égale à 10 ms, l'arc est déterminé comme un arc interne.

4. Procédé selon l'une des revendications précédentes, **caractérisé en ce que**, si le laps de temps T est négatif et de valeur absolue supérieure à 10 ms, une analyse de l'évolution du signal d'apparition d'arc est effectuée.

5. Procédé selon la revendication 4, **caractérisé en ce que**, si le signal présente un point de rupture dans les 500 ms suivant son début d'acquisition, l'arc est déterminé comme un arc interne.

6. Procédé selon la revendication 4, **caractérisé en ce que**, si le signal ne présente pas de point de rupture dans les 500 ms suivant son début d'acquisition, l'arc est déterminé comme un arc de coupure.

7. Procédé selon la revendication 1, **caractérisé en ce qu'**un signal d'existence (s) d'un arc est généré au moyen dudit capteur (8) pour être transmis audit calculateur (5), et **en ce que** la durée dudit signal (s) est comparée à une valeur limite prédéterminée.

8. Procédé selon la revendication 7, **caractérisé en ce que** ladite valeur limite est comprise entre la durée T₁ mesurable d'un arc de coupure et le laps de temps T₂ mesurable entre l'apparition d'un arc interne et son élimination par ouverture du disjoncteur (2), l'arc étant déterminé comme un arc de coupure si la durée du signal (s) est inférieure à cette valeur limite et l'arc étant déterminé comme un arc interne si la durée dudit signal est supérieure à cette valeur limite.

9. Procédé selon la revendication 8, **caractérisé en ce que** ladite valeur limite est de l'ordre de 50 ms.

## Patentansprüche

1. Verfahren zur Unterscheidung eines internen Fehlerlichtbogens von einem Schaltlichtbogen in einem metallgekapselten Schaltgerät mit mindestens einem Sammelschienensystem (1) und einem Schalter (2), das auch mit einem Schutzsystem (4) und einem Rechner (5) ausgestattet ist, und darin besteht, das Auftreten eines Lichtbogens mittels eines Messfühlers (8) festzustellen, der ein Signal für das Auftreten des Lichtbogens (c) erzeugt, dieses Signal dann an den Rechner (5) zu übertragen und den Zeitablauf
T = to - ta zwischen dem Zeitpunkt to des Empfangs eines Auslösebefehls (o) des Schalters, der von dem Schutzsystem (4) an den Rechner (5) übertragen wird, und dem Zeitpunkt ta des Beginns der Erfassung dieses Signals durch den Rechner (5) zu bestimmen.

2. Verfahren nach Anspruch 1, **dadurch gekennzeichnet, dass** der Lichtbogen als ein interner Fehlerlichtbogen bestimmt wird, wenn der Zeitablauf T positiv ist.

3. Verfahren nach einem der vorhergehenden Ansprüche, **dadurch gekennzeichnet, dass** der Lichtbogen als ein interner Fehlerlichtbogen bestimmt wird, wenn der Zeitablauf T negativ und der absolute Wert unter 10 ms liegt oder gleich 10 ms beträgt.

4. Verfahren nach einem der vorhergehenden Ansprüche, **dadurch gekennzeichnet, dass** eine Analyse der Entwicklung des Signals für das Auftreten des Lichtbogens durchgeführt wird, wenn der Zeitablauf T negativ ist und der absolute Wert über 10 ms liegt.

5. Verfahren nach Anspruch 4, **dadurch gekennzeichnet, dass** der Lichtbogen als ein interner Fehlerlichtbogen bestimmt wird, wenn das Signal in den 500 ms nach Beginn der Erfassung einen Unterbrechungspunkt aufweist.

6. Verfahren nach Anspruch 4, **dadurch gekennzeichnet, dass** der Lichtbogen als Schaltlichtbogen bestimmt wird, wenn das Signal in den 500 ms nach Beginn der Erfassung keinen Unterbrechungspunkt aufweist.

7. Verfahren nach Anspruch 1, **dadurch gekennzeichnet, dass** ein Signal für das Vorhandensein (s) des Lichtbogens mittels des genannten Messfühlers (8) erzeugt und an den genannten Rechner (5) übertragen wird und dass die Dauer des genannten Signals (s) mit einem vorbestimmten Grenzwert verglichen wird.

8. Verfahren nach Anspruch 7, **dadurch gekennzeichnet, dass** der genannte Grenzwert zwischen der Dauer T1, messbar von einem Schaltlichtbogen, und dem Zeitablauf T2, messbar zwischen dem Auftreten eines internen Fehlerlichtbogens und seiner Entfernung durch Öffnen des Schalters (2), liegt, wobei der Lichtbogen als Schaltlichtbogen bestimmt wird, wenn die Dauer des Signals (s) unter diesem Grenzwert liegt, und der Lichtbogen als interner Fehlerlichtbogen bestimmt wird, wenn die Signaldauer über diesem Grenzwert liegt.

9. Verfahren nach Anspruch 8, **dadurch gekennzeichnet, dass** der genannte Grenzwert in der Größenordnung von 50 ms liegt.

## Claims

1. A method of discriminating between an internal arc and an interruption arc detected in metal-clad equipment including at least one set of bus bars (8) and a circuit breaker (2), and fitted with a protective system (4) and a computer (5), the method consisting in detecting the appearance of an arc by means of a sensor (8) generating an arc-appearance signal (c), in transmitting said signal to the computer (5), and in determining the time lapse T = tₒ-tₐ between the instant tₒ at which the computer (5) receives a circuit breaker trigger order (o) transmitted thereto by the protective system (4), and the instant tₐ marking the beginning of said signal being acquired by the computer (5).

2. A method according to claim 1, **characterized in that**, if the time lapse T is positive, then the arc is determined as being an internal arc.

3. A method according to any preceding claim, **characterized in that**, if the time lapse T is negative and its absolute value is less than or equal to 10 ms, then the arc is determined as being an internal arc.

4. A method according to any preceding claim, **characterized in that**, if the time lapse T is negative and its absolute value is greater than 10 ms, variation of the arc-appearance signal is analyzed.

5. A method according to claim 4, **characterized in that** if the signal presents a break point within 500 ms following the start of acquisition thereof, then the arc is determined as being an internal arc.

6. A method according to claim 4, **characterized in that** if the signal does not have a break point within 500 ms following the beginning of its acquisition, then the arc is determined as being an interruption arc.

7. A method according to claim 1, **characterized in that** an arc-existence signal (s) is generated by means of said sensor (8) in order to be transmitted to said computer (5), and **in that** the duration of said signal (s) is compared with a predetermined limit value.

8. A method according to claim 7, **characterized in that** said limit value lies between the measurable duration T₁ of an interruption arc and the measurable time lapse T₂ between the appearance of an internal arc and elimination thereof by the circuit breaker (2) opening, the arc being determined as being an interruption arc if the duration of the signal (s) is less than said limit value and the arc being determined as being an internal arc if the duration of said signal is greater than said limit value.

9. A method according to claim 8, **characterized in that** said limit value is about 50 ms.
